Europäisches Patentamt

European Patent Office

Office européen des brevets

(11) Veröffentlichungsnummer: **0 253 139 B1**

## (12) EUROPÄISCHE PATENTSCHRIFT

(45) Veröffentlichungstag der Patentschrift: **27.05.92**

(21) Anmeldenummer: **87108568.4**

(22) Anmeldetag: **13.06.87**

(51) Int. Cl.⁵: **B01F 5/06**

(54) **Rotor-Stator-Maschine.**

(30) Priorität: **12.07.86 DE 8618798 U**
**23.08.86 DE 3628667**
**23.08.86 DE 8622663 U**
**28.08.86 DE 3629285**
**21.04.87 DE 8705772 U**

(43) Veröffentlichungstag der Anmeldung:
**20.01.88 Patentblatt 88/03**

(45) Bekanntmachung des Hinweises auf die
Patenterteilung:
**27.05.92 Patentblatt 92/22**

(84) Benannte Vertragsstaaten:
**AT BE DE FR GB IT NL SE**

(56) Entgegenhaltungen:
**DE-A- 2 403 053**
**DE-A- 2 951 311**
**DE-A- 3 342 304**

(73) Patentinhaber: **Dorr-Oliver Deutschland GmbH**
**Lindenstrasse 43**
**W-4048 Grevenbroich 1(DE)**

(72) Erfinder: **Kohler, Wolf-Ulrich, Dr.**
**Elsternweg 46**
**W-4150 Krefeld 1(DE)**
Erfinder: **Wettengl, Dietmar**
**Robertstrasse 24**
**W-5000 Köln 50(DE)**
Erfinder: **Sleven, Wilbert**
**Franz-Rixen-Strasse 13**
**W-4053 Jüchen 2(DE)**
Erfinder: **Mertens, Hans-Jürgen**
**Römerstrasse 104**
**W-4048 Grevenbroich 2(DE)**
Erfinder: **Olligs, Rudolf**
**Werthmannstrasse 7**
**W-5100 Köln 41(DE)**
Erfinder: **Pannes, Heiner**
**Goethestrasse 162**
**W-4048 Grevenbroich 1(DE)**
Erfinder: **Swalve, Hermann**
**Oststrasse 7**
**W-4053 Jüchen 6(DE)**
Erfinder: **Hallet, Peter**
**Wagnerstrasse 20**
**W-5060 Bergisch-Gladbach 2(DE)**
Erfinder: **Osthaus, Georg**
**Blausteinerstrasse 21c**
**W-4052 Korschenbroich 3(DE)**

(74) Vertreter: **Weber, Dieter, Dr. et al**
**Dr. Dieter Weber, Dipl.-Phys., Klaus Seiffert,**
**Dr. Winfried Lieke, Patentanwälte, Gustav-**
**Freytag-Strasse 25**
**W-6200 Wiesbaden 1(DE)**

**Beschreibung**

Die Erfindung betrifft eine Rotor-Stator-Maschine mit einem einen Teil des Gehäuses mit einem axialen Einlauf für das zu behandelnde Gut und einem radialen Auslauf für das behandelte Gut bildenden, abnehmbaren Stator sowie einem im Gehäuse rotierenden, kegelstumpfförmigen Rotor, dessen Mantelfläche mit koaxialen, verdrehgesicherten, axial festgelegten Ringen gestaffelten Durchmessers ausgestattet ist, die gleichartigen Ringen im Stator auf Lücke gegenüberliegen, wobei die Ringe mit zahnartig vorspringenden Werkzeugen versehen sind.

Bei derartigen Maschinen dienen die Scherkräfte erzeugenden zahnartig vorspringenden Werkzeuge an Stator und Rotor dazu, daß das zu behandelnde Gut gemischt, dispergiert oder homogenisiert wird. Die gegeneinander zeigenden Flächen von Rotor und Stator sind konisch ausgebildet und mit den entsprechenden Werkzeugen versehen. Vielfach werden die Werkzeuge gebildet durch eingedrehte Rillen mit eingefrästen Durchbrechungen bzw. durch in Nuten eingesetzte Ringe, in die die eigentlichen Werkzeuge eingearbeitet sind.

Bei einer solchen Maschine, wie sie in der DE-OS 24 03 053 beschrieben ist, sind die Rotor- und Statorringe jeweils für sich durch mehrere Schrauben befestigt. Damit die Werkzeuge von Rotor und Stator genau ineinanderpassen, müssen diese und die Nuten sehr genau gefertigt sein. Das Einbauen und auch das Ausbauen der Werkzeuge erfordert vom Monteur eine große Geschicklichkeit und ist zeitintensiv, führt also zu längeren Betriebsunterbrechungen, wenn die je nach zu bearbeitendem Medium starkem Verschleiß unterworfenen Ringe ausgetauscht werden müssen. Dies mag - auch wenn es störend ist und Kosten verursacht - bei den üblichen Anwendungsfällen noch tolerierbar sein, bei kontinuierlichen Verfahren jedoch, bei denen die Rotor-Stator-Maschine nur einen Bearbeitungs- oder Verfahrensschritt im gesamten Ablauf darstellt, sind längere Stillstandszeiten äußerst unerwünscht, insbesondere auf dem Gebiet der Biotechnik.

Bei mikrobiologischen Prozessen ergibt sich durch die konstruktive Gestaltung nach dem Stand der Technik ein weiterer gravierender Nachteil, da Spalte und Totecken jeder Art im Innenraum der Maschine sehr kritisch sind bei mikrobiologisch gefährdeten Prozessen und solchen, die keimarm sein müssen.

Mit den Ausführungen nach der DE-A-33 42 304 und der DE-A-29 51 311 ist zwar bereits versucht worden, eine axiale Halterung der Ringe durch Verschrauben, teilweise auch durch eine zusätzliche gegenseitige Klemmung vorzunehmen.

Eine ausreichende Beseitigung der vorerwähnten Nachteile wird dadurch jedoch noch nicht erreicht.

Aufgabe der vorliegenden Erfindung ist es, eine Rotor-Stator-Maschine vorzuschlagen, die aufgrund ihrer konstruktiven Gestaltung besonders geeignet ist für den Einsatz auf dem Gebiet der Biotechnik. Das bedeutet einerseits, daß der Innenraum der Maschine beim Einsatz in mikrobiologisch gefährdeten Prozessen möglichst wenig Möglichkeit zu Produktablagerungen und -rückständen bieten darf und gut zu reinigen bzw. zu spülen sein muß, insbesondere im Hinblick auf den Produktwechsel, und daß andererseits der verschleißbedingte Werkzeugwechsel schnell vor sich gehen muß, um den Gesamtprozeß nicht zu unterbrechen. Eine weitere Notwendigkeit besteht gerade bei den teilweise sehr sensiblen mikrobiologischen Prozessen in einer optimalen Verfahrensleistung und -führung hinsichtlich Scher- und Homogenisiereffekt sowie Temperaturführung, was bei den Maschinen nach dem Stand der Technik nicht gewährleistet ist.

Die Aufgabe wird bei einer Rotor-Stator-Maschine der eingangs beschriebenen Art dadurch gelöst, daß die Ringe jeweils derart in von einem bzw. zwei benachbarten Ringen und dem Stator bzw. Rotor gebildeten nutförmigen Ausnehmungen gehalten sind, daß nur der äußerste Statorring bzw. der innerste Rotorring durch eigene Befestigungsmittel und die übrigen Ringe über an ihnen vorgesehene Schultern durch den jeweils benachbarten Ring festgelegt sind.

Sowohl die Stator- als auch die Rotorringe können nach dem Abnehmen des Stators ohne Schwierigkeit ausgewechselt werden. Dies wird dadurch erreicht, daß bei dem erfindungsgemäßen Aufbau des Werkzeugsatzes das sonst übliche Verkleben der Ringe in den Nuten weitgehend verhindert wird, da hier ein Teil der Nutflächen jeweils durch die nacheinander zu montierenden Ringe gebildet werden.

Die Statorringe können durch Abnehmen des Stators, d.h. des Gehäusedeckels mit einfachen Mitteln trotz der erforderlichen Genauigkeit leicht und schnell demontiert bzw. ausgetauscht werden, da die Werkzeugteile allseitig frei zugänglich sind. Dasselbe gilt für die Rotorringe, da der gesamte Rotor nach Lösen einer Schraube von der Welle abgezogen werden kann. Durch diese erfindungsgemäße Ausbildung wird der Werkzeugwechsel wesentlich vereinfacht, was zu einer bedeutenden Zeit- und Kosteneinsparung führt. Ein besonderer Vorteil der Erfindung besteht darin, daß durch den vorgeschlagenen Aufbau, d.h. die Klemmung der Statorringe von außen nach innen nur durch den äußeren Ring, im übrigen lediglich durch die aufeinanderfolgende Schulteranlage, und die Klemmung der Rotorringe von innen nach außen nur durch die Rotorkappe, im übrigen auch hier lediglich durch die aufeinanderfolgende Schulteranlage, ein einfaches und vor allem schnelles Auswechseln der Verschleißteile möglich ist, insbesondere auch deshalb, weil auch der gesamte Rotor nach Lösen der einzigen zentralen Schraube abgenommen werden kann.

Durch den erfindungsgemäßen Aufbau der Ringe wird als für den Einsatz der Maschine im Bereich der Biotechnik ausschlaggebender Vorteil erreicht, daß die Anzahl der Schrauben, Spalte und Toträume, d.h. Stellen, an denen sich Ablagerungen und Anbackungen bilden können, minimiert werden. Dies ist notwendig bei mikrobiologisch gefährdeten Prozessen und beim Produktwechsel. Es werden damit kurze Spül- und Reinigungszeiten realisiert, was besonders bei häufigem Produktwechsel zur Steigerung der Effektivität führt.

Vorteilhaft ist die Ausgestaltung der Maschine in der Form, daß die Ringe durch in Richtung Maschinenachse gesehen stufenförmige Eindrehungen des Stators bzw. Rotors zentriert sind. Es wird damit eine wesentlich vereinfachte und schnellere Austauschbarkeit erreicht, da sich die Statorringe untereinander von innen nach außen selbst zentrieren und Trennfugen, die sich beim Betrieb zusetzen und die Ringe verkleben, minimiert werden. Dasselbe gilt für die sich von außen nach innen untereinander zentrierenden Rotorringe. Nach einer besonderen Ausgestaltung ist vorgesehen, daß die Werkzeuge jeweils einseitig an der freien Stirnfläche der Ringe angeordnet sind, wodurch die im Hinblick auf die Effektivität des Schervorganges wichtige Genauigkeit der Bearbeitung gewährleistet und die Bearbeitung selbst vereinfacht wird.

Um ein durch die Scherkräfte verursachtes Verdrehen der Ringe gegenüber Stator bzw. Rotor unter allen Belastungszuständen zu verhindern, ist als besondere Maßnahme vorgesehen, daß die Statorringe bzw. Rotorringe Bohrungen auf der Auflageseite aufweisen, die jeweils mit entsprechenden Bohrungen des Stators bzw. Rotors übereinstimmen, in denen Haltestifte eingesetzt sind.

Vorteilhaft in zweifacher Hinsicht ist es, daß die Maschine in der Weise gestaltet ist, daß statorseitig die Statorringe jeweils am Außendurchmesser angeordnete Schultern aufweisen, mittels derer der jeweilige Ring von seinem benachbarten größeren Ring auf die Schulter des benachbarten kleineren Ringes bzw. beim innersten Ring gegen die Auflage-Ringfläche des Stators gepreßt wird und daß der äußerste Statorring mit seiner Schulter durch Klemmkräfte erzeugende Befestigungsschrauben am Stator befestigt ist, daß darüber hinaus rotorseitig die Rotorringe jeweils am Innendurchmesser angeordnete Schultern aufweisen, mittels derer der jeweilige Ring von dem benachbarten kleineren Ring gegen die Schulter des benachbarten größeren Ringes bzw. beim äußersten Ring gegen die Auflage-Ringfläche des Rotors gepreßt wird und daß auf den innersten Rotorring die Klemmkräfte für sämtliche Ringe aufgebracht werden.

Durch die erfindungsgemäßen Schultern wird ein Ring jeweils von dem benachbarten Ring in axialer Richtung gehalten, so daß die Ringe nicht jeder für sich festgeschraubt werden müssen. Das bedeutet eine Reduzierung der Anzahl der Schrauben, der Spalte und Toträume, was günstig ist für die geforderte schnelle und gründliche Reinigung der Maschine beim Produktwechsel und zu einer Verkürzung der Werkzeugwechselzeiten durch Minimierung der notwendigen Arbeitsgänge führt.

Besonders günstig ist es, wenn die Klemmkraft für die Rotorringe in der Art auf den innersten Ring aufgebracht wird, daß am maschinenseitigen Ende der Rotorwelle eine Rotorkappe vorgesehen ist, die mit ihrer Ringfläche auf der Schulter des innersten Rotorringes aufliegt und die mittels einer zentral angeordneten Schraube befestigt ist, die die Spannkraft für die Rotorringe erzeugt. Es werden durch diese einzige Befestigungsschraube neben der kurzen Werkzeugwechselzeit äußerst günstige Verhältnisse für eine gute Reinigung der Maschine geschaffen.

Dem schnellen und sicheren Werkzeugwechsel dient auch die Ausgestaltung in der Art, daß der Stator mittels mehrerer Halteschrauben mit dem Maschinengehäuse abnehmbar verbunden ist, wobei ein Bund des Gehäuses bündig mit der Außenfläche des Statorflansches abschließt und diese Halteschrauben auf einem Teilkreis liegen, der größer ist als der Teilkreis der Befestigungsschrauben des Statorringes und größer als der Durchmesser der Trennfuge. Hierdurch wird eine Vereinfachung der Montage durch die Führung des Stators, der gleichzeitig den Gehäusedeckel darstellt, beim Einsetzen erreicht und eine Beschädigung der Dichtung sicher verhindert. Die Schrauben liegen bei dieser Ausgestaltung außerhalb der Dichtung und im Stator versenkt, was die Reinigungsmöglichkeit von außen und das Aussehen verbessert.

Eine besondere Schwierigkeit in bezug auf die Forderung nach guter Spül- bzw. Reinigungsmöglichkeit der Maschine stellt der funktions- und herstellungsbedingte Spalt zwischen Rückseite des Rotors und rückwärtiger Gehäuseinnenwand dar. An dieser Stelle werden leicht die gesamten Bemühungen an anderer Stelle, Spalte und Toträume zu vermeiden, zunichte gemacht. In einer besonderen Ausgestaltung ist daher vorgesehen, daß die Rückseite des Rotors mit Nuten versehen ist. Diese Nuten bewirken eine nach außen gerichtete Strömung, so daß das sich im Spalt befindliche Gut immer nach außen gefördert wird.

Der für den Werkzeugwechsel notwendige Zeitaufwand wird wesentlich mitbestimmt durch den Anteil für das Abnehmen und Wiederaufsetzen des als Gehäusedeckel ausgebildeten Stators. Insbesondere das Wiederaufsetzen des Deckels bereitet Schwierigkeiten, weil einerseits die Bohrungen im Deckel und die Gewindebohrungen im Gehäuse genau übereinanderliegen müssen, damit die Befestigungsschrauben eingeführt werden können, zum anderen aber die weiter innenliegende Dichtung nicht beschädigt werden darf. Zumindest bei größeren Maschinen kommt hinzu, daß für den An- und Abbau des Gehäusedeckels Hebezeuge nötig sind. Diese Schwierigkeiten werden durch die erfindungsgemäße Ausgestaltung der Rotor-Stator-Maschine in der Weise vermieden, daß der Stator, der gleichzeitig den Gehäusedeckel bildet, mit einem oder mehreren im Gehäuse axial verschiebbaren Führungsbolzen versehen ist, die am äußeren Ende Scharnierflansche bilden, die in mit dem Gehäusedeckel bzw. Stator verbundenen, miteinander fluchtenden Scharnierbolzen drehbar gelagert sind.

Mit dieser Scharnierbefestigung wird erreicht, daß der Gehäusedeckel nach dem Lösen der Befestigungsschrauben zunächst in der Gehäuseausnehmung verbleibt und nicht herausfällt. Ein Monteur kann anschließend ohne besondere Hilfsmittel den Deckel axial aus der Gehäuseausnehmung herausziehen und dann, nach einer bestimmten Wegstrecke, den Deckel mittels der Gelenke verschwenken. Damit wird das Gehäuse geöffnet und der Zugang zu den Werkzeugen freigegeben. In umgekehrter Reihenfolge kann das Gehäuse wieder verschlossen werden, indem der Deckel verschwenkt und dann mittels der Führungsbolzen in die axialen Gehäuseausnehmung hineingeschoben wird, ohne die Dichtung zu beschädigen. Außerdem gewährleistet die Gelenkführung jederzeit, daß die Bohrungen des Deckels genau mit den Gewindebohrungen im Gehäuse fluchten und die Befestigungsschrauben problemlos eingeschraubt werden können.

Ein sicheres Öffnen und Schließen des Gehäusedeckels wird dadurch erreicht, daß die Führungsbolzen in, in axial angeordneten Bohrungen, festsitzenden Lagern geführt sind, wobei das innere Ende der Führungsbolzen jeweils mit einer Anschlageinrichtung versehen ist und die Lager für die herausgezogenen Führungsbolzen als Anschlag dienen. Mit dieser besonderen konstruktiven Ausgestaltung wird erreicht, daß die Führungsbolzen - und so lange der Gehäusedeckel an ihnen befestigt bleibt auch dieser - während der gesamten Dauer des Werkzeugwechsels mit dem Gehäuse verbunden bleibt.

In einer weiteren Ausgestaltung der Erfindung ist vorgesehen, daß die Scharnierflansche der Führungsbolzen in Ausnehmungen des Gehäusedeckels bzw. Stators eingreifen und die Bohrung des Scharnierflansches sowie die Bohrung des Gehäusedeckels bzw. Stators zur Aufnahme des Scharnierbolzens überdeckend angeordnet sind. Eine besonders vorteilhafte Anordnung ergibt sich, wenn die innenliegende Seite des Gehäusedeckels bzw. Stators für jeden Scharnierbolzen eine Ausnehmung zum Einführen desselben aufweist. Eine einfache und platzsparende Ausbildung des Scharniers wird dadurch erreicht, daß die Scharnierbolzen mit Preßsitz in den Bohrungen des Gehäusedeckels bzw. Stators befestigt sind. Neben einer schnellen und sicheren Handhabung beim Werkzeugwechsel wird durch die verdeckten Scharniere eine weitestgehend glatte Oberfläche der Rotor-Stator-Maschine erreicht, wodurch Schmutzecken vermieden werden.

Bei kleineren und leichteren Gehäusedeckeln genügt die Anordnung von zwei Scharnieren zum sicheren Schließen des Gehäusedeckels, ohne die Dichtung zu beschädigen. Bei größeren und schwereren Gehäusedeckeln jedoch ist eine exakte Führung beim Schließen damit nicht in jedem Falle gewährleistet, d.h. es können sich Probleme hinsichtlich der Dichtung und dem Einführen der Befestigungsschrauben ergeben. Es ist daher - wo nötig - vorgesehen, daß der Gehäusedeckel bzw. Stator in Achsrichtung gesehen auf einer Seite mit zwei übereinander angeordneten Scharnieren versehen ist und auf der anderen Seite ein weiterer, nur der Führung dienender Führungsbolzen vorgesehen ist. Zum leichteren Einführen in die Führungsbohrungen kann dieser ein konisches Einführende aufweisen.

Zur Erzielung kurzer Gesamt-Prozeßzeiten kommt es bei mikrobiologischen Prozessen noch wesentlich mehr als bei anderen Einsatzgebieten auf höchste Scher- und Homogenisierleistung der Rotor-Stator-Maschine an. Grundsätzlich wird diese erhöht mit größerer Stufenzahl und größerer Zähnezahl bzw. größerer Anzahl der Lochreihen und größerer Anzahl der Bohrungen sowie geringerer Spaltbreite. Bei den bekannten Maschinen sind die Werkzeuge so angeordnet, daß sich zwischen den Grundflächen der Vertiefungen und den Kopfflächen der Ringe Spalte bilden, die durch ihre Anordnung bedingt nicht verhindern können, daß Teile des zu behandelnden auf dem Wege vom Maschineneintritt zum -austritt durch die durchgehenden Spalte strömt, ohne von den Werkzeugen bearbeitet zu werden.

Um die Effektivität bei gegebenen Auslegungsdaten von Stator und Rotor zu steigern, wird vorgeschlagen, die Rotor-Stator-Maschine für die Einsatzbereiche der Biotechnik so auszuführen, daß die Grundflächen der Statorringe bzw. der Rotorringe vertieft und die diesen Vertiefungen gegenüberliegenden Ringe in diese Vertiefungen hineinragen und daß diese Ringe sowie die Vertiefungen derart ausgebildet sind, daß zwischen den Grundflächen und den jeweils gegenüberliegenden Kopfflächen versetzte Spalte gebildet werden. Mit dieser Ausgestaltung der Maschine wird erreicht, daß das zu behandelnde Gut auf seinem Weg vom Eintritt in die Maschine zum Austritt im Kantenbereich der Werkzeuge zwangsweise umgelenkt wird. Dadurch wird verhindert, daß ein Teil der Partikel ohne Berührung der Werkzeuge und damit unbehandelt vom Eintritt zum Austritt gelangen kann. Durch die jeweiligen Schikanen von Ringstufe zu Ringstufe entstehen Mikrowirbel und Kantenprall mit einer Mikrokavitation. Dadurch und durch eine sich zusätzlich bildende Retentionswirkung wird die Effektivität der Maschine erhöht.

In einer besonderen Ausgestaltung der Maschine ist vorgesehen, daß die Grundflächen der Ringe und die jeweils gegenüberliegenden Kopfflächen parallel zueinander sind und mit der Achse der Welle einen rechten oder spitzen Winkel bilden, was je nach Produkt- und Prozeßanforderungen vorteilhaft sein kann.

Eine weitere Verbesserung der Scher- und Homogenisierleistung kann erreicht werden, wenn die Werkzeuge derart gestaltet werden, daß von einer gedachten theoretischen, konischen Oberfläche des Rotors ausgehend die Kopfflächen der einzelnen Statorringe vom äußeren Ring zur Achse der Welle hin jeweils um ein größer werdendes Maß und damit stufenförmig versetzt und die den jeweiligen Rotorringen zugeordneten Vertiefungen der Statorringe entsprechend angepaßt sind.

Fertigungstechnisch besonders vorteilhaft ist es, wenn die Rotor- und Statorringe nach der Erfindung so ausgeführt werden, daß die Zahngründe in den Ringen konkav ausgebildet sind.

Da die Reaktionen in mikrobiologischen Prozessen teilweise stark von der Temperatur abhängig sind, sind neben den konstruktiven Maßnahmen zur Verbesserung der Scher- und Homogenisierwirkung zusätzliche Vorkehrungen zu treffen für eine optimale Temperaturführung während der Behandlung des Produktes im Rotor-Stator-System. So muß das Medium einmal vor einer Erwärmung oder zum anderen vor einer Abkühlung bewahrt werden. Außerdem muß eine Veränderung in der Zusammensetzung des zu behandelnden Gutes verhindert werden. Besonders wichtig ist diese Temperaturführung beim Produktwechsel, um bereits in der Anlaufphase die richtige Temperatur einstellen zu können, so daß diese verkürzt wird, was zur Steigerung der Leistung des gesamten Prozesses beiträgt.

Es ist daher als besondere Maßnahme im Rahmen der Erfindung vorgesehen, daß im Bereich des Einlaufstutzens und der Zuführleitung für das zu behandelnde Gut ein ringförmiger Wärmetauscher vorgesehen ist. Wird der Wärmetauscher mit einem heißen Wärmemittel oder einem Kühlmittel gespeist, so kann hiermit die Maschine vor Beginn des eigentlichen Betriebes aufgewärmt oder gekühlt werden, so daß das zu behandelnde Gut in eine ausreichend aufgewärmte oder gekühlte Maschine gelangt. Die während des Betriebes erfolgende Wärmeabgabe oder -aufnahme und die dadurch bedingte Abkühlung oder Erwärmung kann laufend über den Wärmetauscher korrigiert werden. Mit der neuerungsgemäßen Maschine kann somit eine stets gleichbleibende Temperatur des zu behandelnden Gutes sichergestellt und eine Verkürzung der Anlaufphase beim Produktwechsel erreicht werden, wenn die optimalen Temperaturwerte der Produkte nicht übereinstimmen. Es kann darüber hinaus eine Einstellung der Viskosität des zu behandelnden Gutes über die Temperatur vorgenommen werden.

Zur Vereinfachung der Fertigung, und um eine Anpassung bei Produkten mit sehr unterschiedlichen Temperatur- und Wärmemengenanforderungen über den Regelbereich eines definierten Wärmetauschers hinaus ohne Probleme und vor allem in kurzer Zeit vornehmen zu können, ist als erfindungsgemäße Ausgestaltung vorgesehen, daß der Wärmetauscher aus einer Austauscherkammer mit Zulauf und Ablauf für das Tauschermedium besteht und daß dieser zwischen dem Flansch des axialen Einlaufstutzens und dem Flansch für die Zuführleitung eingespannt ist.

In weiteren Ausgestaltungen ist vorgesehen, daß der Wärmetauscher an der inneren Ringfläche mit einem rohrförmigen Stutzen in axialer Richtung der Maschine verlängert ist, daß ggf. der Stutzen den Wärmetauscher ein- oder beidseitig überragt, und daß je nach erforderlicher Wärmeaustauschfläche der Stutzen in den Einlaufstutzen und/oder in die Zuführleitung hineinragt. Mit diesen Ausgestaltungen der Rotor-Stator-Maschine ist eine Anpassung an optimale Prozeßbedingungen in weiten Temperaturbereichen möglich, da erstens die Wärmeaustauschflächen entsprechend gestaltet werden können und zweitens bei sehr unterschiedlichen Anforderungen der Wärmetauscher leicht und vor allem schnell ausgewechselt werden kann mit ausgesprochen kurzen Stillsetzungszeiten der Rotor-Stator-Maschine, so daß eine Unterbrechung des Gesamtprozesses vermieden werden kann.

Es kann jedoch mit diesen Maßnahmen nicht nur die Erwärmung oder Kühlung der Maschine verbessert und damit ihre Effektivität erhöht werden, sondern darüber hinaus kann unmittelbar auf das zu behandelnde Gut eingewirkt werden.

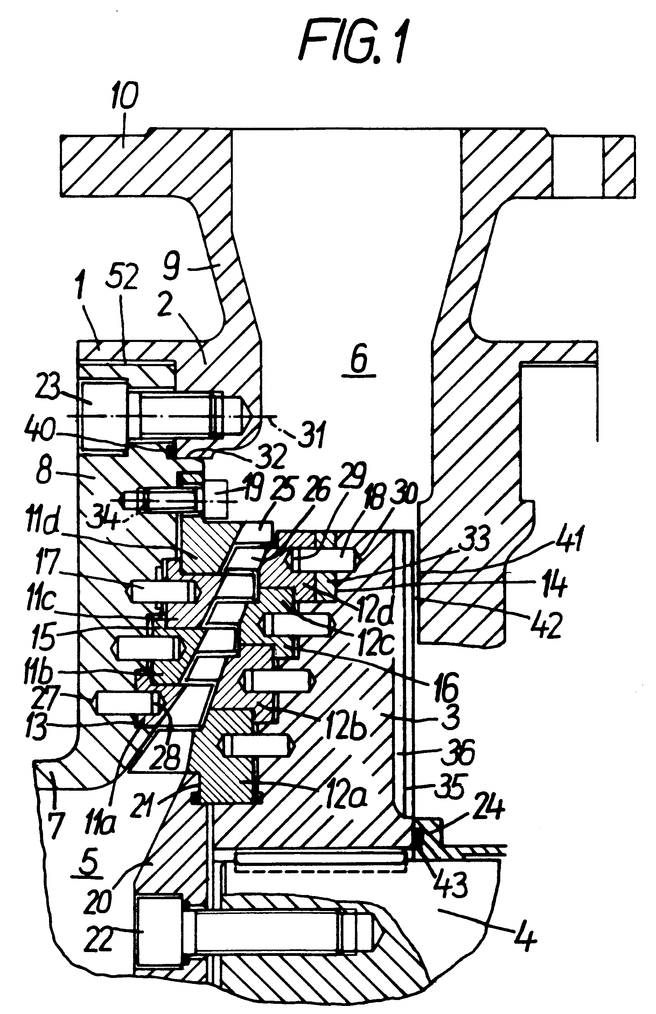

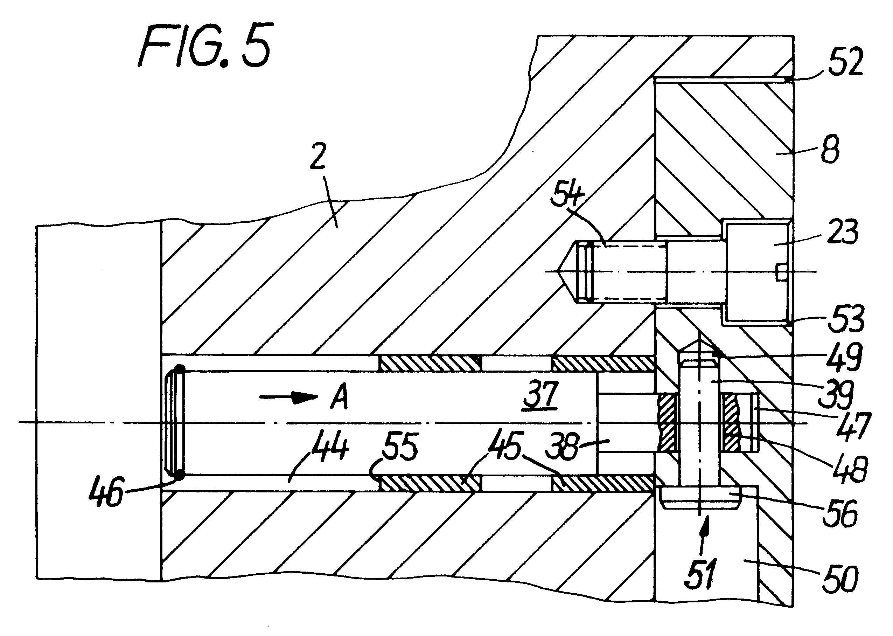

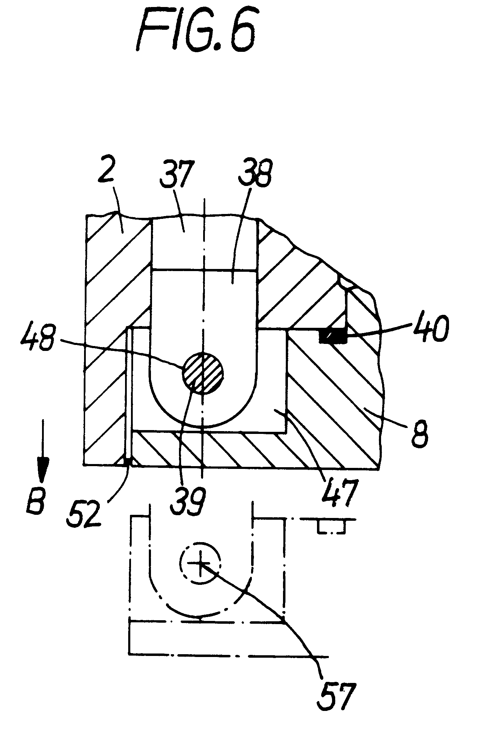

Ein Ausführungsbeispiel der Erfindung sowie Beispiele für die Ausgestaltung der erfindungsgemäßen Merkmale sind in Fig. 1 bis 10 dargestellt und nachfolgend näher beschrieben. Es zeigen:

| Fig. 1 | einen Teil-Längsschnitt der Rotor-Stator-Maschine, |
| Fig. 2 | einen Teilschnitt des Rotors, |
| Fig. 3 | eine Draufsicht auf die Rückseite des Rotors (in Richtung III von Fig. 2), |
| Fig. 4 | Vorderansicht einer Rotor-Stator-Maschine mit Blockflansch und innenliegenden Scharnieren, |
| Fig. 5 | einen Schnitt gemäß Linien V-V in Fig. 4, |
| Fig. 6 | einen Schnitt gemäß Linien VI-VI in Fig. 4, |
| Fig. 7 | einen vergrößerten Ausschnitt im Bereich der Werkzeuge, |
| Fig. 8 | eine weitere Ausgestaltung der Werkzeuge hinsichtlich des Zahngrundes, |
| Fig. 9 | einen Schnitt durch die Rotor-Stator-Maschine mit Wärmetauscher; im oberen Teil mit Stutzen und Flansch nach dem Stand der Technik, im unteren mit Blockflansch, |
| Fig. 10 | einen vergrößerten Ausschnitt des Wärmetauschers. |

Die Rotor-Stator-Maschine besteht aus einem Gehäuse 2, einem Stator 8, der gleichzeitig den vorderen Teil des Gehäuses 2 bildet, einem Rotor 3 und den Ringen 11 und 12, die zur Erzeugung der Scherkräfte mit Verzahnungen bzw. Zahnkranzprofilen - den eigentlichen Werkzeugen 25 und 26 - versehen sind. Die Statorringe 11a, 11b, 11c und 11d sind auf dem Stator 8 befestigt, die Rotorringe 12a, 12b, 12c und 12d auf dem Rotor 3, der über die Welle 4 von einem nicht dargestellten Motor angetrieben wird. Der Einlauf für das zu behandelnde Gut ist mit 5 bezeichnet und wird vom Stator 8 und den in diesen übergehenden Einlaufstutzen 7 gebildet. Der mit 6 bezeichnete Auslauf des Gutes geht in den Auslaufstutzen 9 und den Flansch 10 über.

An der der Welle 4 gegenüberliegenden Seite ist das Gehäuse 2 mit einer stirnseitigen Ausnehmung 52 versehen, in die der den Gehäusedeckel bildende Stator 8 eingesetzt ist. Auf einem Teilkreis 31 ist der Stator 8 mit mehreren Schrauben 23 befestigt, wobei die Dichtung 40 gegen das Gehäuse axial zwischen den Schrauben 23 und der Trennfuge 32 erfolgt. Die sich gegenüberliegenden Flächen des Stators 8 und des Rotors 3 sind stufenförmig ausgebildet zur Aufnahme der Statorringe 11 bzw. der Rotorringe 12.

In der Zeichnung ist beispielhaft eine Rotor-Stator-Maschine mit vier Stator- und vier Rotorringen dargestellt. Andere Ringzahlen kommen je nach Art und Konsistenz des zu behandelnden Gutes und der Art der Verarbeitung zum Einsatz. Die Statorrringe 11a, 11b, 11c und 11d sind mit jeweils am Außendurchmesser angeordneten Schultern 15 versehen, mit deren Hilfe der einzelne Ring axial festgesetzt wird. Dies geschieht, indem der benachbarte, größere Ring auf dieser Schulter aufliegt und ihn auf die Schulter des nächst kleineren Ringes preßt. Der innerste Statorring 11a liegt auf der Aufnahme-Ringfläche 13 des Stators 8 auf. Die Klemmkraft für sämtliche Statorringe 11 wird von den Befestigungsschrauben 19 aufgebracht, die in der Schulter des äußersten Statorringes 11d über den Umfang verteilt angeordnet sind. Die Rotorringe 12a, 12b, 12c und 12d klemmen sich gegenseitig in gleicher Weise fest, jedoch sind die Schultern 16 in diesem Falle jeweils am Innendurchmesser angeordnet und zwar so, daß der jeweils benachbarte kleinere Ring auf dieser Schulter aufliegt und ihn auf die Schulter des nächst größeren Ringes preßt. Der äußerste Statorring 12d liegt entweder direkt oder über einen Zwischenring 33 auf der Auflage-Ringfläche 14 des Rotors auf. Die Klemmkraft für sämtliche Rotorringe 12 wird von einer zentral in die Welle 4 eingeschraubten Schraube 22 aufgebracht und über die Ringfläche 21 der Rotorkappe 20 auf den Ring 12a und von da über die weiteren Ringe 12b, 12c und 12d auf den Rotor 3 übertragen. Dieser stützt sich gegen die Wellenhülse 24 ab.

Die Stator- und Rotorringe 11 und 12 sind durch Haltestifte 17 und 18 gegen Verdrehen gesichert, die in jeweils fluchtend angeordneten Bohrungen 27 und 28 auf der Statorseite bzw. 29 und 30 auf der Rotorseite sitzen.

In die jeweils inneren Stirnseiten der Ringe 11 und 12 sind die eigentlichen Werkzeuge 25 und 26 in Form von Zähne bildenden Durchbrechungen bzw. Zahnprofilen eingearbeitet, so daß diese ringförmig jeweils auf Lücke stehen und ineinandergreifen.

Die Rückseite 35 des Rotors 3 und die Innenwand 41 des Gehäuses 2 bilden einen Spalt 42, der aus technischen Gründen gegeben ist. Damit sich in diesem Spalt kein Gut festsetzt, ist die Rückseite des Rotors mit Nuten 36 versehen. Diese Nuten bewirken eine nach außen gerichtete Strömung, so daß das sich im Spalt befindliche Gut immer nach außen gefördert wird, und daß sich damit in diesem Spalt kein Gut festsetzen kann. Die nach außen gerichtete Strömung hat darüber hinaus den Vorteil, daß die Dichtung 43 zwischen der Wellenhülse 24 und dem Rotor 3 druckentlastet ist.

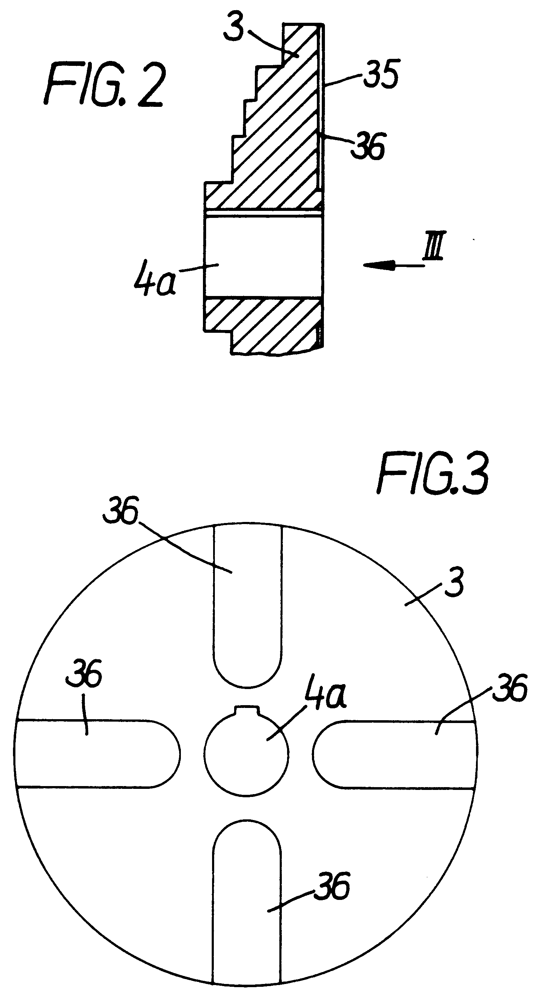

In dem in Fig. 2 und 3 dargestellten Ausführungsbeispiel sind vier Nuten 36 dargestellt, die gerade und radial mit einem Abstand von der Rotormitte aus beginnend verlaufen. Eine andere, für die Fertigung vorteilhafte Ausführung besteht in über die Wellenbohrung 4a hinweg durchgehenden Nuten. Je nach Art, Zusammensetzung und Konsistenz des zu bearbeitenden Gutes können andere Nutzahlen z.B. zwei, drei, fünf, sechs oder mehr Nuten von Vorteil sein. Auch ein anderer Nutverlauf z.B. in einem Winkel zur Radialen oder ein gebogener sind je nach Anwendungsfall vorteilhaft.

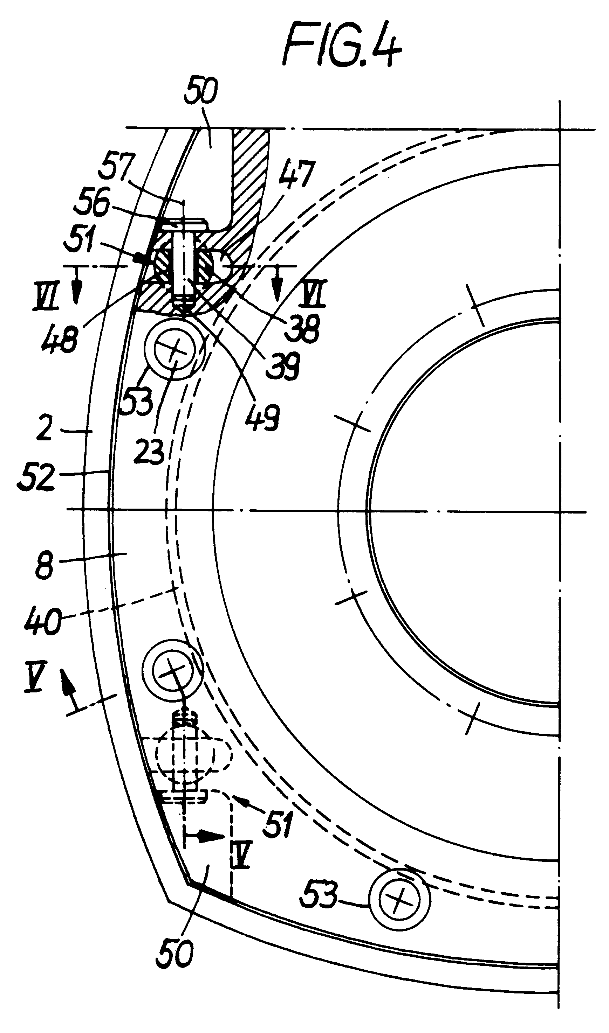

In dem Ausführungsbeispiel gemäß Fig. 4 bis 6 ist ein den Stator 8 bildender Gehäusedeckel dargestellt, der mit dem Blockflansch eine Einheit bildet und der in eine stirnseitige Ausnehmung 52 des Gehäuses 2 einsetzbar ist. Zwischen dem Gehäuse 2 und dem Gehäusedeckel bzw. Stator 8 befindet sich eine Dichtung 40. Befestigt wird der Stator 8 in dem Gehäuse 2 mittels Schrauben 23, die durch Öffnungen 53 des Stators 8 geführt werden und in Gewindebohrungen 54 des Gehäuses 2 eingeschraubt sind. Zum einfachen Öffnen und Schließen des Gehäusedeckels bzw. Stators 8 sind Scharniere 51 vorgesehen, mittels derer der Stator 8 nach Entfernen der Befestigungsschrauben 23 geschwenkt werden kann. Die Scharniere 51 bestehen einerseits aus einem innerhalb des Gehäuses 2 gelagerten Führungsbolzen 37 mit einem Scharnierflansch 38 und andererseits aus einem Scharnierbolzen 39, der mit dem Gehäusedeckel bzw. Stator 8 fest verbunden ist. Die Führungsbolzen 37 sind in parallel zur Maschinenlängsachse verlaufenden Bohrungen 44 des Gehäuses 2 axial verschiebbar in Lagern 45 gelagert. Damit die Führungsbolzen 37 nur einen bestimmten axialen Weg ausführen können, sind sie am inneren Ende mit einer Anschlageeinrichtung 46 versehen. Als Anschlag dienen die Lager 45, in denen die Führungsbolzen 37 gelagert sind, wobei die inneren Stirnflächen 55 der inneren Lager 45 für die Anschlageeinrichtung 46 den Anschlag bilden. Die Scharnierflansche 38 sind mit Bohrungen 38 versehen und werden in eine Ausnehmung 47 des Gehäusedeckels bzw. Stators 8 eingeführt. Der Bohrung 48 ist eine Bohrung 49 des Stators 8 zugeordnet, so daß der Scharnierbolzen 39 durch beide Bohrungen 48 und 49 eingeführt werden kann. Damit dies leichter zu bewerkstelligen ist, ist eine weitere innere Ausnehmung 50 in dem Gehäusedeckel bzw. Stator 8 vorgesehen, so daß hier auch Platz für den Kopf 56 des Scharnierbolzens 39 vorhanden ist.

Das Öffnen des Gehäuses 2 erfolgt durch Entfernen des Gehäusedeckels bzw. Stators 8 in folgender Weise:

Zunächst werden die Befestigungsschrauben 23 entfernt. Aufgrund er Scharniere 51 verbleibt der Stator 8 zunächst noch innerhalb der Gehäuseausnehmung 52. Jetzt wird der Stator 8 in Richtung des Pfeiles B vom Gehäuse 2 weg und damit aus der Gehäuseausnehmung 52 herausgezogen und zwar so weit, bis die Anschlageeinrichtungen 46 an den inneren Stirnflächen 55 der Lager 45 anliegen. Der Gehäusedeckel bzw. Stator 8 befindet sich dann so weit vor dem Gehäuse 2, daß er ohne weiteres um die Achse 57 der Scharnierbolzen 39 verschwenkt werden kann. Zum Schließen wird in genau umgekehrter Reihenfolge verfahren.

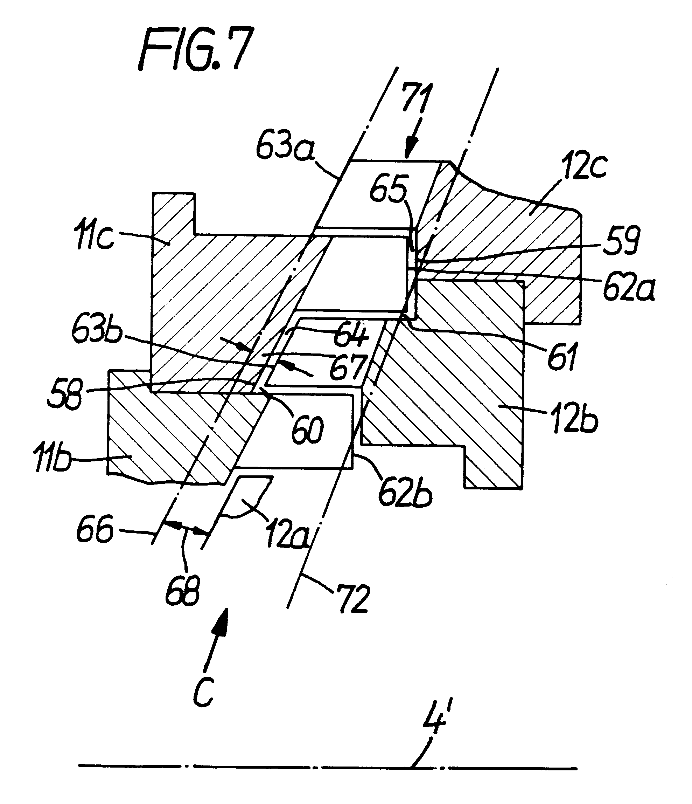

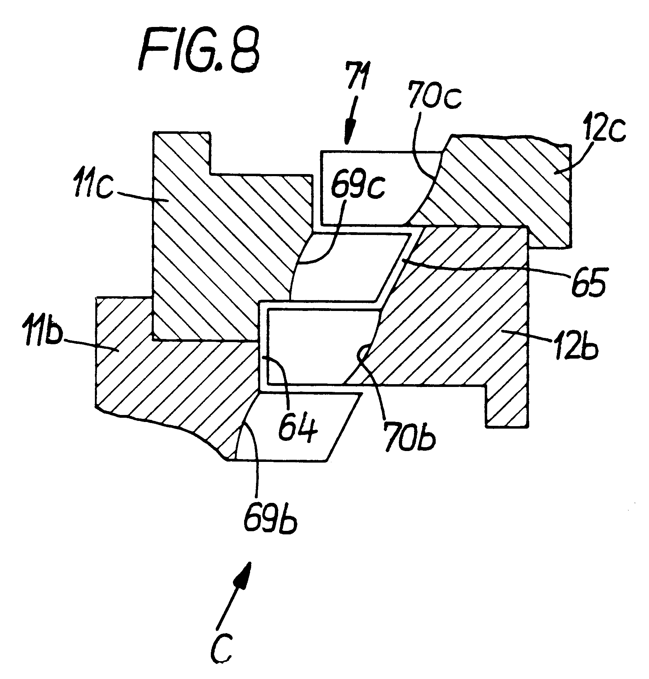

In Fig. 7 und 8 sind Beispiele für die erfindungsgemäße Ausbildung der Werkzeuge dargestellt. Diese bestehen im wesentlichen aus den gestaffelten Ringen 11 und 12 des Stators 8 bzw. Rotors 3, in die Werkzeugkammern 71 eingefräst oder eingegossen sind. Die einzelnen Ringe weisen Vertiefungen 60 und 61 auf, in die die jeweils gegenüberliegenden Ringe hineinragen. Sowohl der Stator 8 als auch der Rotor 3 bilden mit ihren Werkzeugen theoretische, konische Oberflächen 66 und 72, in die die Vertiefungen 60 und 61 eingebracht sind, so daß die Ringe 11 und 12 mit ihren Werkzeugkammern 71 in eingebautem Zustand ineinandergreifen. Zwischen den Grundflächen 58 und 59 und den Kopfflächen 63 bzw. 62 werden dabei die Spalte 64 und 65 gebildet. Sind diese Spalte 64 und 65 parallel und liegen wie üblich von innen nach außen auf einer Geraden, so strömt ein Teil des Gutes auf seinem Weg vom Eintritt zum Austritt - die Strömung des zu behandelnden Gutes erfolgt in Richtung des Pfeils C - nahezu ungehindert durch diese Spalte, ohne von den Werkzeugen bearbeitet zu werden.

Erfindungsgemäß sind die Spalte 64 zwischen den Grundflächen 58 der Statorringe 11 und den Kopfflächen 63 der Rotorringe 12 von innen nach außen versetzt angeordnet. Entsprechendes gilt für die Spalte 65 zwischen den Grundflächen 59 der Rotorringe 12 und den Kopfflächen 62 der Statorringe 11. An den dadurch entstehenden Schikanen wird das zu behandelnde Gut von Ringstufe zu Ringstufe zwangsweise umgelenkt. Die Spalte 64 und 65 können nun erfindungsgemäß mit der Achse 4', der Welle 4 einen rechten und/oder spitzen Winkel bilden. So sind in Fig. 7 zwei Alternativen dargestellt: Die Spalte 64 bilden einen spitzen Winkel zur Achse 4', die Spalte 65 hingegen einen rechten Winkel; auch die Kombination von spitz- und rechtwinkliger Anordnung ist denkbar.

Wesentlich ist, daß die Spalte 64 und 65 nicht jeweils auf einer Linie bzw. Geraden von innen nach außen, sondern gegeneinander versetzt angeordnet sind. Eine versetzte Anordnung kann auch dadurch erreicht werden, daß von der gedachten theoretischen, konischen Oberfläche 66 der Rotorringe 12 ausgehend die Kopfflächen 63a bzw. 63b usw. der Ringe 12c bzw. 12b usw. vom äußersten, nicht dargestellten Ring 12d zur Achse 4' hin jeweils um ein größer werdendes Maß 67 bzw. 68 versetzt sind und damit eine Stufenform bilden. Die den Statorringen 11 jeweils gegenüberliegenden Vertiefungen 60 der Rotorringe 12 müssen entsprechend zunehmend versetzt ausgeführt sein. Für die Spalte 65 zwischen den Grundflächen 59 der Rotorringe und den Kopfflächen 62 der Statorringe 11 gilt entsprechendes.

Die einzelnen Ringe 11 und 12 sind mit zusätzlichen Ausnehmungen versehen, so daß einzelne Zähne gebildet werden. Es ist erfindungsgemäß vorgesehen, die Zahngründe 69 und 70 der einzelnen Zahnlücken eines jeden Ringes konkav auszubilden. Durch diese Maßnahme können die Zähne vorteilhaft mit einem einfachen Scheibenfräser hergestellt werden.

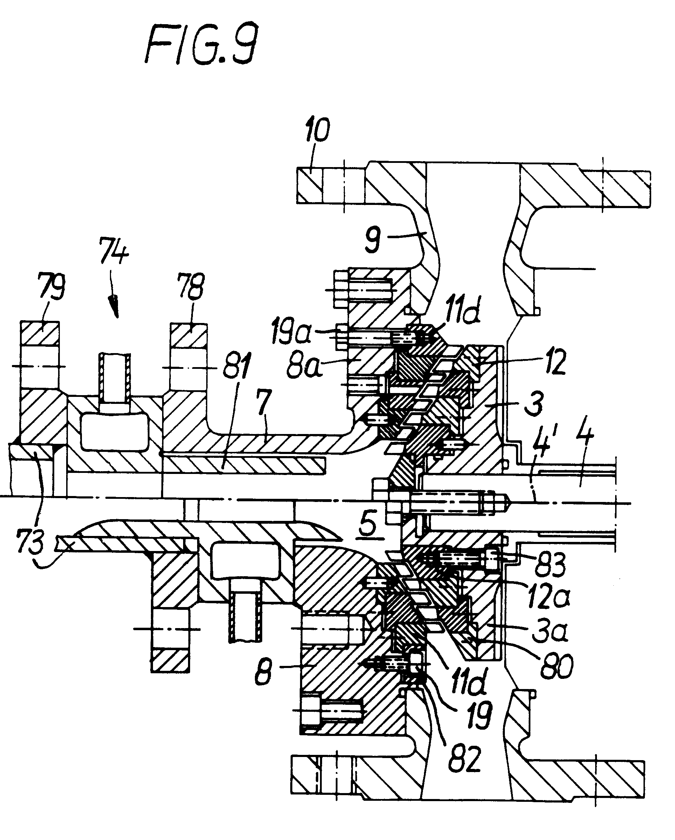

In Fig. 9 sind verschiedene Kombinationen der Merkmale der Erfindung beispielhaft dargestellt. Der Einlauf 5 mit dem in diesem Bereich angeordneten Wärmetauscher 74 ist in der oberen Hälfte entsprechend dem Stand der Technik mit einem Stutzen 7 und einem Flansch 78 versehen, wobei der die Wärmeaustauschfläche bildende Stutzen 81 einseitig am Wärmetauscher 74 angeordnet ist und in den Einlaufstutzen 7 hineinragt. Gegenüber dem Ausführungsbeipiel in Fig. 1 sind hier die Befestigungsschrauben 19a für den äußersten Statorring 11d von außen durch den den Gehäusedeckel bildenden Stator 8a hindurchgeführt.

In der unteren Hälfte ist der Einlauf 5 nach der Erfindung durch einen mit dem Stator 8 eine Einheit bildenden Blockflansch geformt, was zu einer sehr vorteilhaften kompakten Bauweise der Maschine führt. Das Ausführungsbeispiel nach Fig. 9 zeigt die Verwendung eines Ringes 82 für die Klemmung des äußersten Statorringes 11d durch versenkte Befestigungsschrauben 19 und den Einsatz eines zusätzlichen Leitringes 80 mit nicht dargestellten Leitflächen sowie die Befestigung des innersten Rotorringes 12a mit Schrauben 83 von der Rückseite des separat befestigten Rotors 3a aus. In dieser unteren Hälfte ist die Ausführung des Wärmetauschers 74 mit beidseitigen Wärmeaustauschflächen dargestellt.

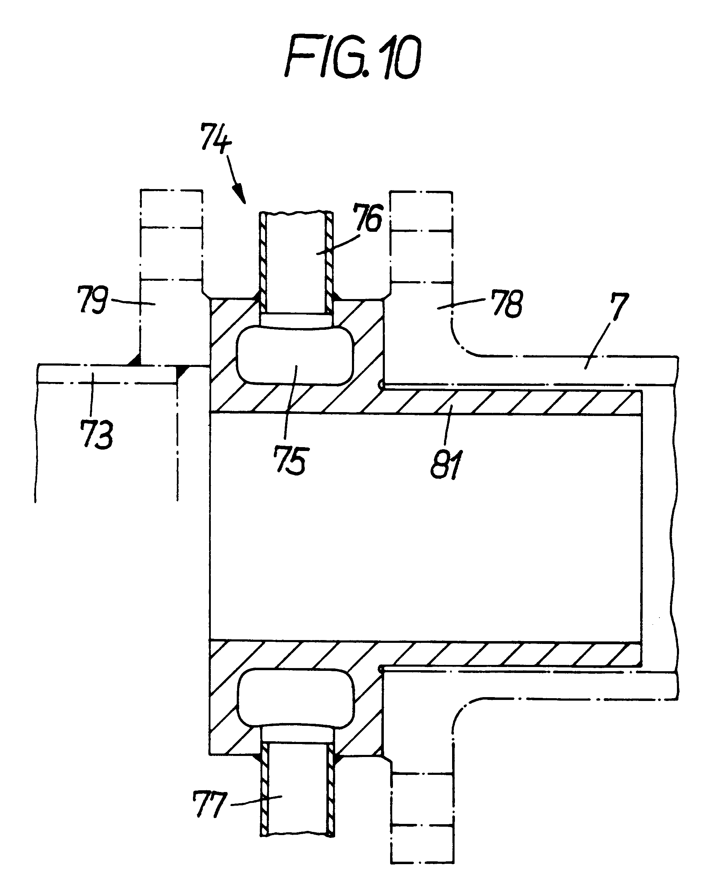

In Fig. 10 ist der Einbau des Wärmetauschers 74 mit der Austauschkammer 75, dem Zulauf 76, dem Auslauf 77 für das Tauschermedium und dem die Wärmeaustauschfläche bildenden, in diesem Falle einseitigen und in den Einlaufstutzen 7 hineinragenden Stutzen 81 zwischen dem Flansch 78 der Maschine und dem Flansch der Zuführleitung 73 vergrößert dargestellt.

**Patentansprüche**

1. Rotor-Stator-Maschine mit einem einen Teil des Gehäuses (2) mit einem axialen Einlauf (5) für das zu behandelnde Gut und einem radialen Auslauf (6) für das behandelte Gut bildenden, abnehmbaren Stator (8) sowie einem im Gehäuse rotierenden, kegelstumpfförmigen Rotor (3), dessen Mantelfläche mit koaxialen, verdrehgesicherten, axial festgelegten Ringen (12) gestaffelten Durchmesser ausgestattet ist, die gleichartigen Ringen (11) im Stator (8) auf Lücke gegenüberliegen, wobei die Ringe (11, 12) mit zahnartig vorspringenden Werkzeugen (25, 26) versehen sind, dadurch gekennzeichnet, daß die Ringe (11, 12) jeweils derart in von einem bzw. zwei benachbarten Ringen und dem Stator (8) bzw. Rotor (3) gebildeten nutförmigen Ausnehmungen gehalten sind, daß nur der äußerste Statorring (11d) bzw. der innerste Rotorring (12a) durch eigene Befestigungsmittel (19, 20) und die übrigen Ringe über an ihnen vorgesehene Schultern (15, 16) durch den jeweils benachbarten Ring festgelegt sind.

2. Maschine nach Anspruch 1, dadurch gekennzeichnet, daß die Ringe (11, 12) durch in Richtung der Maschinenachse gesehen stufenförmige Eindrehungen des Stators (8) bzw. Rotors (3) zentriert sind.

3. Maschine nach Anspruch 1 oder 2, dadurch gekennzeichnet, daß die Werkzeuge (25 und 26) jeweils einseitig an der freien Stirnfläche der Ringe (11 bzw. 12) angeordnet sind.

4. Maschine nach einem der Ansprüche 1 bis 3, dadurch gekennzeichnet, daß die Statorringe (11) bzw. Rotorringe (12) Bohrungen (28 bzw. 30) auf der Auflageseite aufweisen, die jeweils mit entsprechenden Bohrungen (27 bzw. 29) des Stators (8) bzw. Rotors (3) übereinstimmen, in denen Haltestifte (17 bzw. 18) eingesetzt sind.

5. Maschine nach einem der Ansprüche 1 bis 4, dadurch gekennzeichnet, daß die Statorringe (11) jeweils am Außendurchmesser angeordnete Schultern (15) aufweisen, mittels derer der jeweilige Ring von seinem benachbarten größeren Ring auf die Schulter des benachbarten kleineren Ringes bzw. beim innersten Ring (11a) gegen die Auflage-Ringfläche (13) des Stators (8) gepreßt wird und daß der äußerste Statorring (11d) mit seiner Schulter durch Klemmkräfte erzeugende Befestigungsschrauben (19) am Stator befestigt ist.

6. Maschine nach einem der Ansprüche 1 bis 4, dadurch gekennzeichnet, daß die Rotorringe (12) jeweils am Innendurchmesser angeordnete Schultern (16) aufweisen, mittels derer der jeweilige Ring von dem benachbarten kleineren Ring gegen die Schulter des benachbarten größeren Ringes bzw. beim äußersten Ring (12d) gegen die Auflage-Ringfläche (14) des Rotors (3) gepreßt wird und daß auf den innersten Rotorring (12a) die Klemmkräfte für sämtliche Ringe aufgebracht werden.

7. Maschine nach Anspruch 6, dadurch gekennzeichnet, daß am maschinenseitigen Ende der Rotorwelle (4) eine Rotorkappe (20) vorgesehen ist, die mit ihrer Ringfläche (21) auf der Schulter des innersten Rotorringes (12a) aufliegt und die mittels einer zentral angeordneten Schraube (22) befestigt ist, die die Spannkraft für die Rotorringe (12) erzeugt.

8. Maschine nach einem der Ansprüche 1 bis 7, dadurch gekennzeichnet, daß der Stator (8) mittels mehrerer Halteschrauben (23) mit dem Maschinengehäuse (2) abnehmbar verbunden ist, wobei ein Bund (1) des Gehäuses bündig mit der Außenfläche des Statorflansches abschließt und diese Halteschrauben auf einem Teilkreis (31) liegen, der größer ist als der Teilkreis (34) der Befestigungsschrauben (19) des Statorringes (11d) und größer als der Durchmesser der Trennfuge (32).

9. Maschine nach einem der Ansprüche 1 bis 8, dadurch gekennzeichnet, daß die Rückseite (35) des Rotors (3) mit Nuten (36) versehen ist.

10. Maschine nach Anspruch 9, dadurch gekennzeichnet, daß der Stator (8), der gleichzeitig den Gehäusedeckel bildet, mit einem oder mehreren im Gehäuse (2) axial verschiebbaren Führungsbolzen (37) versehen ist, die am äußeren Ende Scharnierflansche (38) bilden, die in mit dem Gehäusedeckel bzw. Stator (8) verbundenen, miteinander fluchtenden Scharnierbolzen (39) drehbar gelagert sind.

11. Maschine nach Anspruch 10, dadurch gekennzeichnet, daß die Führungsbolzen (37) in, in axial angeordneten Bohrungen (44), festsitzenden Lagern (45) geführt sind, wobei das innere Ende der Führungsbolzen (37) jeweils mit einer Anschlageinrichtung (46) versehen ist und die Lager (45) für die herausgezogenen Führungsbolzen (37) als Anschlag dienen.

12. Maschine nach einem der Ansprüche 10 oder 11, dadurch gekennzeichnet, daß die Scharnierflansche (38) der Führungsbolzen (37) in Ausnehmungen (47) des Gehäusedeckels bzw. Stators (8) eingreifen und die Bohrung (48) des Scharnierflansches (38) sowie die Bohrung (49) des Gehäusedeckels bzw. Stators (8) zur Aufnahme des Scharnierbolzens (39) überdekkend angeordnet sind.

13. Maschine nach einem der Ansprüche 10 bis 12, dadurch gekennzeichnet, daß die innenliegende Seite des Gehäusedeckels bzw. Stators (8) für jeden Scharnierbolzen (39) eine Ausnehmung (50) zum Einführen desselben aufweist.

14. Maschine nach einem der Ansprüche 10 bis 13, dadurch gekennzeichnet, daß die Scharnierbolzen (39) mit Preßsitz in den Bohrungen (49) des Gehäusedeckels bzw. Stators (8) befestigt sind.

15. Maschine nach Anspruch 10, dadurch gekennzeichnet, daß der Gehäusedeckel bzw. Stator (8) in Achsrichtung gesehen auf einer Seite mit zwei übereinander angeordneten Scharnieren (51) versehen ist und auf der anderen Seite ein weiterer, nur der Führung dienender Führungsbolzen vorgesehen ist.

16. Maschine nach einem der Ansprüche 1 bis 15, dadurch gekennzeichnet, daß die Grundflächen (58 und 59) der Statorringe (11) bzw. der Rotorringe (12) vertieft und die diesen Vertiefungen (60 und 61) gegenüberliegenden Ringe (12 bzw. 11) in diese Vertiefungen hineinragen und daß diese Ringe (11 und 12) sowie die Vertiefungen (60 und 61) derart ausgebildet sind, daß zwischen den Grundflächen (58 und 59) und den jeweils gegenüberliegenden Kopfflächen (63 bzw. 62) versetzte Spalte (64 und 65) gebildet werden.

17. Maschine nach Anspruch 16, dadurch gekennzeichnet, daß die Grundflächen (58 und 59) der Ringe (11 bzw. 12) und die jeweils gegenüberliegenden Kopfflächen (63 bzw. 62) parallel zueinander sind und mit der Achse (4') der Welle (4) einen rechten oder spitzen Winkel bilden.

18. Maschine nach Anspruch 16 oder 17, dadurch gekennzeichnet, daß von einer gedachten theoretischen, konischen Oberfläche (66) des Rotors (3) ausgehend die Kopfflächen (63) der einzelnen Statorringe (11) vom äußeren Ring (11d) zur Achse (4') der Welle (4) hin jeweils um ein größer werdendes Maß (67 bzw. 68) und damit stufenförmig versetzt und die den jeweiligen Rotorringen (12) zugeordneten Vertiefungen (60) der Statorringe (11) entsprechend angepaßt sind.

19. Maschine nach einem der Ansprüche 16 bis 18, dadurch gekennzeichnet, daß die Zahngründe (69 und 70) in den Ringen (11 und 12) konkav ausgebildet sind.

20. Maschine nach einem der Ansprüche 1 bis 19, dadurch gekennzeichnet, daß im Bereich des Einlaufstutzens (7) und der Zuführleitung (73) für das zu behandelnde Gut ein ringförmiger Wärmetauscher (74) vorgesehen ist.

21. Maschine nach Anspruch 20, dadurch gekennzeichnet, daß der Wärmetauscher (74) aus einer Austauscherkammer (75) mit Zulauf (76) und Ablauf (77) für das Tauschermedium besteht.

22. Maschine nach Anspruch 20 oder 21, dadurch gekennzeichnet, daß der Wärmetauscher (74) zwischen dem Flansch (78) des axialen Einlaufstutzens (7) und dem Flansch (79) für die Zuführleitung (73) eingespannt ist.

23. Maschine nach einem der Ansprüche 20 bis 22, dadurch gekennzeichnet, daß der Wärmetauscher (74) an der inneren Ringfläche mit einem rohrförmigen Stutzen (81) in axialer Richtung der Maschine verlängert ist.

24. Maschine nach Anspruch 23, dadurch gekennzeichnet, daß der Stutzen (81) den Wärmetauscher (74) ein- oder beidseitig überragt.

25. Maschine nach Anspruch 24, dadurch gekennzeichnet, daß der Stutzen (81) in den Einlaufstutzen (7) und/oder in die Zuführleitung (73) hineinragt.

## Claims

1. A rotor-stator machine having a detachable stator (8) forming a portion of the casing (2) having an axial inlet (5) for the material to be treated and a radial outlet (6) for the treated material, and a frustoconical rotor (3) which rotates in the casing and whose generated surface has axially secured rings (12) of stepped diameter secured against rotation and disposed staggered opposite similar rings (11) in the stator (8), the rings (11, 12) being equipped with tools (25, 26) projecting after the fashion of teeth, characterized in that each of the rings (11, 12) is so retained in groove-shaped recesses formed in one or two adjacent rings and in the stator (8) and rotor (3) respectively that only the outermost stator ring (11d) and the innermost rotor ring (12a) respectively are secured via their own attaching means (19, 20), the remaining rings being secured via their shoulders (15, 16) by the particular adjacent ring.

2. A machine according to claim 1, characterized in that the rings (11, 12) are centred by recesses in the stator (8) and rotor (3) respectively which are stepped, viewed in the direction of the machine axis.

3. A machine according to claims 1 or 2, characterized in that each of the tools (25 and 26) is disposed on one side at the free end face of the rings (11; 12).

4. A machine according to one of claims 1 to 3, characterized in that the stator rings (11) and rotor rings (12) respectively have bores (28; 30) on the bearing side which each match corresponding bores (27; 29) of the stator (8) and rotor (3) respectively and in which retaining pins (17; 18) are inserted.

5. A machine according to one of claims 1 to 4, characterized in that each of the stator rings (11) has disposed on its external diameter shoulders (15) by means of which the particular ring is pressed by its adjacent larger ring on to the shoulder of the adjacent smaller ring and in the case of the innermost ring (11a) against the annular bearing surface (13) of the stator (8), and the outermost stator ring (11d) is attached to the stator via its shoulder by attaching screws (19) generating clamping forces.

6. A machine according to one of claims 1 to 4, characterized in that the internal diameter of each of the rotor rings (12) has shoulders (16) by means of which the particular ring is pressed by the adjacent smaller ring against the shoulder of the adjacent larger ring and in the case of the outermost ring (12d) against the annular bearing surface (14) of the rotor (3), and the clamping forces for all the rings are applied to the innermost rotor ring (12a).

7. A machine according to claim 6, characterized in that provided at the machine side end of the rotor shaft (4) is a rotor cap (20) which bears via its annular surface (21) against the shoulder of the innermost rotor ring (12a) and which is attached by means of a centrally disposed screw (22) generating the clamping force for the rotor rings (12).

8. A machine according to one of claims 1 to 7, characterized in that the stator (8) is detachably connected to the machine casing (2) by means of a number of retaining screws (23), a collar (1) of the casing adjoining flush the outer surface of the stator flange and said retaining screws lying on a pitch circle (31) which is greater than the pitch circle (44) of the attaching screws (19) of the stator ring (11d) and larger than the diameter of the joint (32).

**9.** A machine according to one of claims 1 to 8, characterized in that the rear side (35) of the rotor (3) is formed with grooves (36).

**10.** A machine according to claim 9, characterized in that the stator (8); which at the same time forms the casing cover, has one or more guide pins (37) axially displaceable in the casing (2) and forming at the outer end hinge flanges (38) rotatably mounted in hinge pins (39) which are aligned with one another and connected to the casing cover or stator (8).

**11.** A machine according to claim 10, characterized in that the guide pins (37) are guided in bearings (45) fixed in axially disposed bores (44), the inner end of each of the guide pins (37) being provided with a stop device (46) and the bearings (45) acting as stops for the withdrawn guide pins (37).

**12.** A machine according to one of claims 10 or 11, characterized in that the hinge flanges (38) of the guide pins (37) engage in recesses (47) in the casing cover or stator (8), and the bore (48) of the hinge flange (38) and also the bore (49) of the casing cover or stator (8) are disposed in registration for receiving the hinge pin (39).

**13.** A machine according to one of claims 10 to 12, characterized in that the inner side of the casing cover or stator (8) is formed with a recess (50) for the introduction of each hinge pin (39).

**14.** A machine according to one of claims 10 to 13, characterized in that the hinge pins (39) are attached with a force fit in the bores (49) in the casing cover or stator (8).

**15.** A machine according to claim 10, characterized in that viewed in the axial direction, the casing cover or stator (8) has on one side two superimposed hinges (51) and on the other side a further guide pin serving exclusively for guiding.

**16.** A machine according to one of claims 1 to 15, characterized in that the end surfaces (58 and 59) of the stator rings (11) and the rotor rings (12) respectively are depressed and the rings (12; 11) opposite such depressions (60; 61) extend thereinto, and these rings (11; 12) and the depressions (60; 61) are so constructed that offset gaps (64 and 65) are formed between the end surfaces (58 and 59) and the particular opposite head surfaces (63; 62).

**17.** A machine according to claim 16, characterized in that the base surfaces (58 and 59) of the rings (11; 12) and each of the opposite head surfaces (63; 62) are parallel with one another and form a right angle or an acute angle with the axis (4') of the shaft (4).

**18.** A machine according to claims 16 or 17, characterized in that starting from an imaginary theoretical conical surface (66) of the rotor (3), the head faces (63) of the individual stator rings (11) are offset by progressively a larger amount (67; 68) and therefore stepped from the outer ring (11d) in the direction of the axis (4') of the shaft (4), and the depressions (60) in the stator rings (11) associated with the particular rotor rings (12) are adapted correspondingly.

**19.** A machine according to one of claims 16 to 18, characterized in that the tooth bottoms (69 and 70) in the rings (11 and 12) are constructed concave.

**20.** A machine according to one of claims 1 to 19, characterized in that an annular heat exchanger (74) is provided in the zone of the inlet spigot (7) and the supply line (73) for the material to be treated.

**21.** A machine according to claim 20, characterized in that the heat exchanger (74) comprises an exchanger chamber (75) with inlet (76) and discharge (77) for the exchanger medium.

**22.** A machine according to claims 20 or 21, characterized in that the heat exchanger (74) is clamped between the flange (78) of the axial inlet spigot (7) and the flange (79) for the supply line (73).

**23.** A machine according to one of claims 20 to 22, characterized in that at the inner annular surface the heat exchanger (74) is prolonged by a tubular spigot (81) in the axial direction of the machine.

**24.** A machine according to claim 23, characterized in that the spigot (81) extends beyond the heat exchanger (74) on one or both sides.

**25.** A machine according to claim 24, characterized in that the spigot (81) extends into the inlet spigot (7) and/or into the supply line (73).

**Revendications**

**1.** Machine à rotor et stator, comportant un stator démontable (8), constituant une partie du carter (2) ayant une entrée axiale (5) pour le produit à traiter et une sortie radiale (6) pour le produit à traiter, ainsi qu'un rotor (3), de forme tronconique, tournant dans le carter, et dont la surface externe est réalisée avec des anneaux coaxiaux (12), montés fixes axialement, et bloqués en rotation, et comportant des diamètres étages, qui sont situes en chicanes en face d'anneaux du même type (11) dans le stator (8), les anneaux (11, 12) étant équipés d'outils (25, 26) faisant saillie a la façon de dents, caracterisee en ce que chacun des anneaux (11, 12) est maintenu dans des évidements en forme de rainures, formes par un ou deux anneaux voisins et le stator (8), ou le rotor (3), en ce que seul l'anneau le plus extérieur (11d) du stator, ou l'anneau le plus intérieur (12a) du rotor, est fixe par des moyens de fixation (19, 20) qui lui sont propres, et que les autres anneaux sont fixes chacun par l'anneau voisin, au moyen d'epaulements (15, 16) prévus sur eux.

2. Machine suivant la revendication 1, caractérisée en ce que les anneaux (11, 12) sont centrés par des gorges tournées dans le stator (8) ou le rotor (3), et étagées suivant la direction de l'axe de la machine.

3. Machine suivant la revendication 1 ou la revendication 2, caractérisée en ce que les outils (25, 26) sont chacun disposes d'un côté sur la face frontale libre respective des anneaux (11 et 12).

4. Machine suivant l'une quelconque des revendications 1 à 3, caractérisée en ce que les anneaux (11) du stator, et les anneaux (12) du rotor, présentent des alésages (respectivement 28 et 30) sur la face d'appui, qui sont chacun en concordance avec des alésages correspondants (respectivement 27 et 29) du stator (8) et du rotor (3), alésages dans lesquels sont installes des ergots de fixation (respectivement 17 et 18).

5. Machine suivant l'une quelconque des revendications 1 a 4, caractérisée en ce que les anneaux (11) du stator présentent chacun des épaulements (15) disposés sur leur diamètre extérieur, au moyen desquels chaque anneau concerne est appuyé, par son anneau voisin plus grand, sur l'épaulement de l'anneau voisin plus petit, ou, dans le cas de l'anneau situé le plus a l'intérieur (lia), contre la surface annulaire d'appui (13) du stator (8) et en ce que l'anneau le plus extérieur (11d) du stator avec son épaulement est fixé sur le stator au moyen de vis de fixation (19) exerçant un effort de serrage.

6. Machine suivant l'une quelconque des revendications 1 à 4, caractérisée en ce que les anneaux (12) du rotor présentent chacun des épaulements (16) disposés sur leur diamètre intérieur, au moyen desquels chaque anneau concerne est appliqué, par son anneau voisin plus petit, contre l'épaulement de l'anneau voisin plus grand, ou, dans le cas de l'anneau situé le plus a l'extérieur (12d), contre la surface annulaire d'appui (14) du rotor (3), et en ce que, sur l'anneau situé le plus à l'intérieur (12a), sont reportés les efforts de serrage des différents anneaux.

7. Machine suivant la revendication 6, caractérisée en ce qu'à l'extrémité côté machine de l'arbre de rotor (4), est prévu un chapeau de rotor (20) qui s'appuie par sa surface annulaire (21) sur l'épaulement de l'anneau du rotor, situé le plus à l'intérieur (12a), et qui est fixé au moyen d'une vis (22) centrée, qui exerce l'effort de serrage pour les anneaux (12) du rotor.

8. Machine suivant l'une quelconque des revendications 1 à 7, caractérisée en ce que le stator (8) est relié, de façon démontable, avec le carter (2) de la machine au moyen de plusieurs vis de fixation (23), tandis qu'une collerette (1) du carter se raccorde, en affleurant, avec la surface externe de la bride du stator, et que ces vis de fixation se trouvent sur un cercle (31) plus grand que le cercle (34) des vis de fixation (19) de l'anneau (11d) du stator et plus grand que le diamètre de la surface de joint (32).

9. Machine suivant l'une quelconque des revendications 1 à 8, caractérisée en ce que la face arrière (35) du rotor (3) est munie de cannelures (36).

10. Machine suivant la revendication 9, caractérisée en ce que le stator (8), qui constitue en même temps le couvercle du carter, est équipé d'une ou plusieurs broches de guidage (37), pouvant se déplacer axialement dans le carter (2), qui forment, à leur extrémité extérieure, des pattes de charnière (38), qui sont montées tournantes dans des axes de charnière (39) reliés au couvercle du carter (2) et au stator (8) et alignées les unes avec les autres.

11. Machine suivant la revendication 10, caractérisée en ce que les broches de guidage (37) sont guidées dans des coussinets (45) placés fixes dans des alésages (44) disposés axialement, l'extrémité intérieure des broches de guidage (37) étant chacune munie d'un dispositif de butée (46) et les coussinets (45) servant de butée pour les broches de guidage (37) tirées vers l'extérieur.

12. Machine suivant l'une des revendications 10 ou 11, caractérisée en ce que les pattes de charnière (38) des broches de guidage (37) s'emboîtent dans des évidements (47) du couvercle du carter et du stator (8), et en ce que l'alésage (48) de la patte de charnière (38), ainsi que l'alésage (49) du couvercle du carter et du stator (8), pour recevoir l'axe de charnière (39), forment un assemblage à recouvrement.

13. Machine suivant l'une quelconque des revendications 10 à 12, caractérisée en ce que le côté situé à l'intérieur du couvercle du carter et du stator (8) présente, pour chaque axe de charnière (39), un évidement (50) pour l'y introduire.

14. Machine suivant l'une quelconque des revendications 10 a 13, caractérisée en ce que les axes de charnière (39) sont fixés avec un ajustage serre dans les alésages (49) du couvercle du carter et du stator (8).

15. Machine suivant la revendication 10, caractérisée en ce que le couvercle du carter, ou le stator (8), est équipé, en regardant suivant la direction axiale, d'un côté avec deux charnières (51) disposées l'une au-dessus de l'autre, et, de l'autre côté, avec une autre broche de guidage, servant seulement au guidage.

16. Machine suivant l'une quelconque des revendications 1 à 15, caractérisée en ce que les surfaces (58 et 59) formant respectivement la base des anneaux (11) du stator et des anneaux (12) du rotor (3) sont en retrait, et en ce que les anneaux (12, ou 11) se trouvant en face de ces cavités (60 et 61), pénètrent ans ces cavités, et en ce que ces anneaux (11 et 12), ainsi que les cavités (60 et 61), sont réalisés de façon à constituer des intervalles décalés (64 et 65) entre les surfaces de base (58 et 59) et les surfaces (63 et 62) des parties supérieures, situées en face de chacune d'elles.

17. Machine suivant la revendication 16, caractérisée en ce que les surfaces (58 et 59) formant la base des anneaux (11 et 12) et les surfaces (63 et 62) des parties supérieures, situées en face de chacune d'elles, sont parallèles les unes aux autres et forment, avec l'axe (4') de l'arbre (4), un angle droit ou un angle aigu.

18. Machine suivant la revendication 16 ou la revendication 17, caractérisée en ce qu'en partant d'une surface externe conique (66), théorique, du rotor (3), les surfaces (63) des parties supérieures des différents anneaux (11) du stator, sont décalées chaque fois d'une grandeur (67 et 68) devenant plus grande en allant de l'anneau le plus extérieur (11d) du stator vers l'axe (4') de l'arbre (4), et en ce que les cavités (60) des anneaux (11) du stator, associées à chacun des anneaux (11) du rotor, sont ajustées en conséquence.

19. Machine suivant l'une quelconque des revendications 16 à 18, caractérisée en ce que les bases des dents (69 et 70) dans les anneaux (11 et 12) sont réalisées concaves.

20. Machine suivant l'une quelconque des revendications 1 à 19, caractérisée en ce que, dans la zone du raccord d'entrée (7) et de la conduite d'alimentation (73) pour le produit à traiter, il est prévu un échangeur de chaleur (74) annulaire.

21. Machine suivant la revendication 20, caractérisée en ce que l'échangeur de chaleur (74) est constitué d'une chambre d'échange (75) comportant une arrivée (76) et un départ (77) pour le fluide d'échange.

22. Machine suivant la revendication 20 ou la revendication 21, caractérisée en ce que l'échangeur de chaleur (74) est serre entre la bride (78) du raccord d'entrée (7) et la bride (79) recevant la conduite d'alimentation (73).

23. Machine suivant l'une quelconque des revendications 20 a 22, caractérisée en ce que l'échangeur de chaleur (74), sur sa surface interne annulaire, est prolongé, suivant la direction axiale de la machine, par un raccord (81) en forme de tube.

24. Machine suivant la revendication 23, caractérisée en ce que le raccord (81) dépasse dans l'échangeur de chaleur (74), ou dépasse des deux côtés.

25. Machine suivant la revendication 24, caractérisée en ce que le raccord (81) dépasse dans le raccord d'entrée (7) et/ou dans la conduite

**EP 0 253 139 B1**

d'alimentation (73).

# FIG.1

# FIG. 2

# FIG.3

# FIG.4

FIG.5

EP 0 253 139 B1

# FIG.6

## FIG.7

FIG.8

FIG.9

# FIG.10